# EUROPEAN PATENT APPLICATION

(11) **EP 4 436 153 A1**
(43) Date of publication of application: **25.09.2024**
(21) Application number: 22900145.8
(22) Date of filing: 24.10.2022
(51) Int. Cl.: H04M 15/00, H04W 4/021

(54) **PRESENCE REPORTING AREA SENDING METHOD AND APPARATUS, ELECTRONIC DEVICE, AND STORAGE MEDIUM**

(30) Priority: 30.11.2021 CN 202111449977
(71) Applicant: ZTE Corporation, Shenzhen, Guangdong 518057 (CN)
(72) Inventor: LIANG, Rongye, Shenzhen, Guangdong 518057 (CN); FU, Weitao, Shenzhen, Guangdong 518057 (CN)
(74) Representative: Osterhoff, Utz
(86) International application number: PCT/CN2022/127140
(87) International publication number: WO 2023/098340

(57) **Abstract**

Embodiments of the present application relate to a method and a device for sending a presence reporting area, an electronic equipment, and a storage medium. The method for sending a presence reporting area (PRA) includes: after receiving a first PRA sent by a first network element, sending a first message to a mobility management entity (MME) network element, where the first message carries the first PRA and a reporting action, and the reporting action is configured to instruct starting the PRA; and after receiving a second PRA sent by a second network element, sending a second message to the MME when the second PRA is the same as the first PRA, where the second message carries the second PRA and a reporting action, and the reporting action is configured to indicate updating the PRA.

## Description

### CROSS-REFERENCE TO RELATED APPLICATIONS

The present application claims priority to Chinese patent application No. 202111449977.8, and filed on November 30, 2021, the entire contents of which are incorporated herein by reference.

### TECHNICAL FIELD

Embodiments of the present application relate to the technical field of mobile communication, and in particular to a method and a device for sending a presence reporting area, an electronic equipment, and a storage medium.

### BACKGROUND

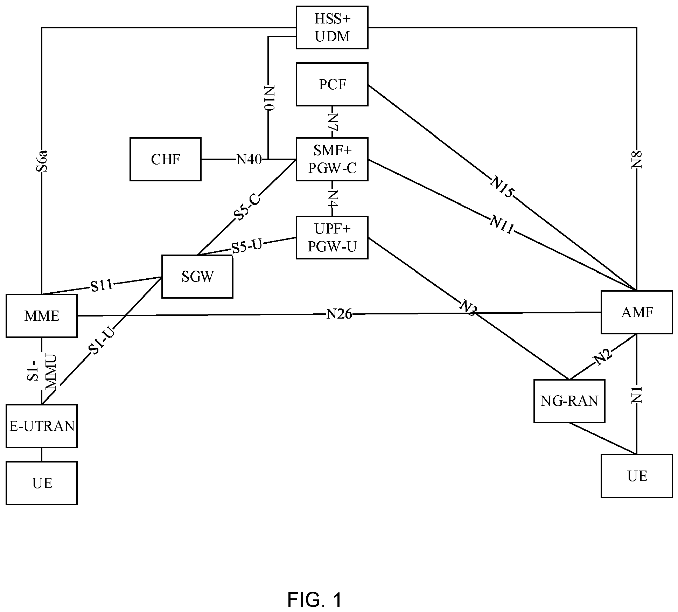

In the 4G and 5G interoperable systems, as shown in FIG. 1, the 5G architecture in the interoperable system includes: the access management function (AMF), the session management function (SMF), the user plane function (UPF), the unified data management (UDM), the policy control function (PCF), the NF repository function (NRF), the charging function (CHF), the mobility management entity (MME), the PDN gateway (PGW), and the signaling gateway (SGW).

The function of the presence reporting area (PRA) is a list of cell locations predefined or configured in the PCF or the CHF. If a user signs up this function, the PRA is sent to the MME and instructs the reporting action. When the user moves the location of the terminal and enters or exits the list of the PRA cell location, the reporting for the PRA information of the MME will be triggered, and the PGW-C will transmit the PRA information to the PCF or the CHF to perform control functions, such as the related policy function and the charging function.

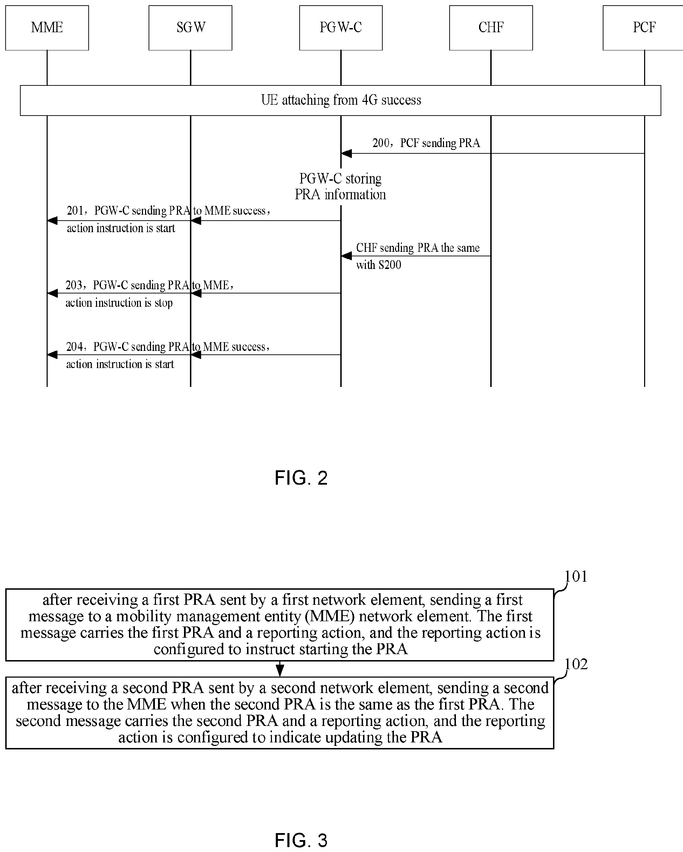

When the user accesses the interoperable system from 4G, the CHF and the PCF are selected after accessing. The 32.291 protocol allows the CHF to send the PRA, and the 29.571 protocol allows the PCF to issue the PRA. Therefore, there will be a case that both the CHF and the PCF send the PRA. If the CHF and the PCF send the PRA in different time periods and there are duplicate transmissions, the PGW-C needs to carry the latest PRA to the MME. As shown in FIG. 2, the PGW-C processes the reporting action STOP and the reporting action START, which prolongs the entire message transmission process, does not guarantee the successful interaction of sending and receiving messages, and increases the signaling overhead between network elements.

### SUMMARY

The main purpose of the embodiments of the present application is to provide a method and a device for sending a presence reporting area (PRA), an electronic equipment and a storage medium, aiming to make the PRA deployed by operators sent to the MME in a timely, accurate and reliable manner, reducing the signaling overheads between network elements and the consumption of the network performance, thereby speeding up the processing speed of the PGW-C and making it more lightweight.

To achieve the above objectives, embodiments of the present application provide a method for sending the PRA, including: after receiving a first PRA sent by a first network element, sending a first message to a mobility management entity (MME) network element, where the first message carries the first PRA and a reporting action, and the reporting action is configured to instruct starting the PRA; and after receiving a second PRA sent by a second network element, sending a second message to the MME when the second PRA is the same as the first PRA, where the second message carries the second PRA and a reporting action, and the reporting action is configured to indicate updating the PRA.

To achieve the above objectives, embodiments of the present application further provide a device for sending the PRA, including: a first sending module configured to send a first message to a mobility management entity (MME) network element after receiving a first PRA sent by a first network element, where the first message carries the first PRA and a reporting action, and the reporting action is configured to instruct starting PRA; and a second sending module configured to send a second message to the MME when the second PRA is the same as the first PRA after receiving a second PRA sent by a second network element, where the second message carries the second PRA and a reporting action, and the reporting action is configured to indicate updating the PRA.

To achieve the above objectives, embodiments of the present application further provide an electronic equipment, including: at least one processor; and a memory communicating with the at least one processor, where the memory stores an instruction executable by the at least one processor, and the instruction is executed by the at least one processor to make the at least one processor implement the method for sending the PRA as mentioned above.

To achieve the above objectives, embodiments of the present application further provide a computer-readable storage medium storing a computer program. When the computer program is executed by a processor, the method for sending the PRA as mentioned above is implemented.

In the embodiment of the present application, during the process of sending the PRA, after receiving the first PRA sent by the first network element, the first message is sent to the MME network element. The first message carries the first PRA and a reporting action. The reporting action indicates starting the PRA. When a second PRA sent by the second network element is received and the second PRA is the same as the first PRA, a second message is sent to the MME. The second message carries the second PRA and a reporting action. The reporting action indicates updating the PRA. By directly sending the reporting action of the second network element for updating the PRA to the MME when the PRA of the first network element is the same as the PRA of the second network element, it is ensured that the PRA deployed by the operator is sent to the MME in a timely, accurate, and reliable manner, which also reduces the signaling overheads between network elements, reduces the consumption of network performance, thereby speeding up the processing speed of the PGW-C and making it more lightweight. In this way, the following problem in the existing technology can be solved: the PGW-C processing the two messages of the reporting action STOP and the reporting action START lengthens the entire message transmission process, which does not guarantee the successful interaction of sending and receiving messages, and increases the signaling overheads between network elements.

### BRIEF DESCRIPTION OF THE DRAWINGS

FIG. 1 is a schematic diagram of the 5G architecture in the 4G and 5G interoperable systems.
FIG. 2 is a schematic flowchart of the PGW-C processing the reporting action STOP and the reporting action START in the 4G and 5G interoperable systems.
FIG. 3 is a flowchart of a method for sending the PRA according to an embodiment of the present application.
FIG. 4 is a flowchart of the method for sending the PRA according to another embodiment of the present application.
FIG. 5 is a flowchart of the method for sending the PRA according to another embodiment of the present application.
FIG. 6 is a flowchart of the method for sending the PRA according to another embodiment of the present application.
FIG. 7 is a schematic structural diagram of a device for sending the PRA according to an embodiment of the present application.
FIG. 8 is a schematic structural diagram of an electronic equipment according to an embodiment of the present application.

### DETAILED DESCRIPTION OF THE EMBODIMENTS

In order to make the purpose, the technical solution and the advantage of embodiments in the present application clearer, various embodiments of the present application will be described in detail below with reference to the accompanying drawings. However, those skilled in the art can understand that in each embodiment of the present application, many technical details are provided to enable readers to better understand the present application. However, even without these technical details and various changes and modifications based on the following embodiments, the technical solution in the present application can also be implemented. The division of the following embodiments is for the convenience of description and should not constitute any limitation on the specific implementation of the present application. The various embodiments can be combined with each other and referenced with each other on the premise that there is no contradiction.

One embodiment of the present application relates to a method for sending a presence reporting area (PRA), applied to the PGW-C in the 4G and 5G interoperable systems. As shown in FIG. 3, the method includes:
step 101, after receiving a first PRA sent by a first network element, sending a first message to a mobility management entity (MME) network element. The first message carries the first PRA and a reporting action, and the reporting action is configured to instruct starting the PRA.

In an embodiment, the first network element may be a policy control function (PCF) network element or a charging function (CHF) network element. When the user accesses the 4G and 5G interoperable systems from 4G, the first network element in the interoperable system will be selected as the PCF network element or the CHF network element. After the first network element is set, when the first network element detects that it contains a predefined or configured cell location list (that is, when there is the PRA), the first network element will send the first PRA to the PGW-C. After the PGW-C receives the first PRA reported by the first network element, a first message will be sent to the MME network element. The sent first message carries a first PRA and a reporting action. The field in the reporting action of the first message is configured to indicate starting PRA.

In an embodiment, the first message sent by the PGW-C to the MME network element is actually a first update bearer request carrying the first PRA and indicating starting the reporting action of the PRA.

Step 102, after receiving a second PRA sent by a second network element, sending a second message to the MME when the second PRA is the same as the first PRA. The second message carries the second PRA and a reporting action, and the reporting action is configured to indicate updating the PRA.

In an embodiment, the second network element may be a PCF network element or a CHF network element. The type of the second network element is determined by the type of the first network element. When the first network element is the PCF network element, the second network element is the CHF network element, and when the first network element is the CHF network element, the second network element is the PCF network element.

In an embodiment, after the PGW-C sends the first message to the MME network element, the second network element detects that it contains a predefined or configured cell location list (that is, there is a PRA), the second PRA will be sent to the PGW-C. After receiving the second PRA reported by the second network element, the PGW-C will compare the second PRA of the second network element with the first PRA of the first network element, and determine whether the second PRA of the second network element is the same as the first PRA of the first network element.

In an embodiment, when the second PRA of the second network element is the same as the first PRA of the first network element, a second message is sent to the MME network element. The sent second message carries the second PRA and the reporting action, and the field in the reporting action of the second message is configured to indicate updating the PRA. The second PRA carried in the second message can also be the first PRA or the identifier of the first PRA.

In an embodiment, the second message sent by the PGW-C to the MME network element is actually a second update bearer request carrying the second PRA and indicating starting the reporting action of the PRA.

In an embodiment, when the first network element (the second network element) is the PCF network element, the 29.571 protocol allows the PCF network element to send the first PRA (the second PRA) to the PGW-C. When the first network element (the second network element) is the CHF, the 32.291 protocol allows the CHF to send the first PRA (the second PRA) to the PGW-C.

In an embodiment, the PGW-C receives the first PRA sent by the first network element and the second PRA sent by the second network element through the serviced SBI interface.

In the embodiment of the present application, during the process of sending the PRA, after receiving the first PRA sent by the first network element, the first message is sent to the MME network element. The first message carries the first PRA and a reporting action. The reporting action indicates starting the PRA. When a second PRA sent by the second network element is received and the second PRA is the same as the first PRA, a second message is sent to the MME. The second message carries the second PRA and a reporting action. The reporting action indicates updating the PRA. By directly sending the reporting action of the second network element for updating the PRA to the MME when the PRA of the first network element is the same as the PRA of the second network element, it is ensured that the PRA deployed by the operator is sent to the MME in a timely, accurate, and reliable manner, which also reduces the signaling overheads between network elements, reduces the consumption of network performance, thereby speeding up the processing speed of the PGW-C and making it more lightweight. In this way, the following problem in the existing technology can be solved: the PGW-C processing the two messages of the reporting action STOP and the reporting action START lengthens the entire message transmission process, which does not guarantee the successful interaction of sending and receiving messages, and increases the signaling overheads between network elements.

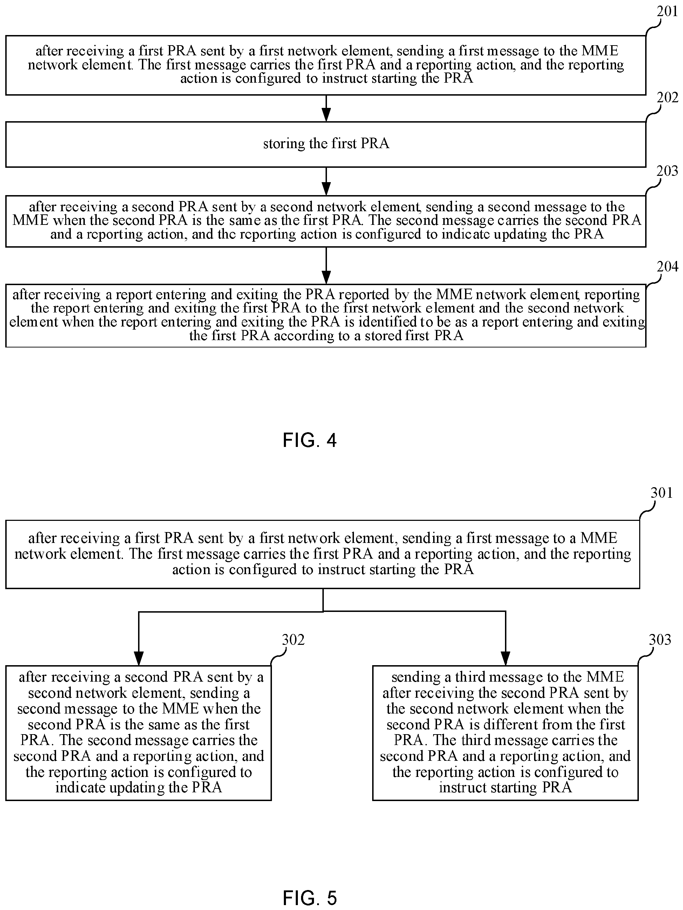

One embodiment of the present application relates to a method for sending the PRA, applied to the PGW-C in the 4G and 5G interoperable systems. As shown in FIG. 4, the method includes:
step 201, after receiving a first PRA sent by a first network element, sending a first message to the MME network element. The first message carries the first PRA and a reporting action, and the reporting action is configured to instruct starting the PRA.

In an embodiment, the step is substantially the same as the step 101 in the embodiment of the present application, which will not be repeated here.

Step 202, storing the first PRA.

In an embodiment, after receiving the first PRA sent by the first network element, the PGW-C will store the first PRA, to determine the difference between the first PRA of the first network element and the second PRA of the second network element.

Step 203, after receiving a second PRA sent by a second network element, sending a second message to the MME when the second PRA is the same as the first PRA. The second message carries the second PRA and a reporting action, and the reporting action is configured to indicate updating the PRA.

In an embodiment, this step is substantially the same as the step 102 in the embodiment of the present application, which will not be repeated here.

Step 204, after receiving a report entering and exiting the PRA reported by the MME network element, reporting the report entering and exiting the first PRA to the first network element and the second network element when the report entering and exiting the PRA is identified to be as a report entering and exiting the first PRA according to a stored first PRA.

In an embodiment, when the user moves the terminal and enters or exits the list of the cell location in the PRA, the MME network element will be triggered to report the report entering and exiting the PRA to the PGW-C. After receiving the report entering and exiting the PRA reported by the MME network element, the PGW-C will first determine whether the report entering and exiting the PRA is a report entering and exiting the first PRA. When the report entering and exiting the PRA reported by the MME network element is the report entering and exiting the first PRA of the first network element, the report entering and exiting the first PRA will be reported to the first network element, so that the first network element can perform the related policy control function and the charging function according to its own type. Since the second PRA of the second network element received by the PGW-C is the same as the first PRA of the first network element, the PGW-C also reports the report entering and exiting the first PRA to the second network element, so that the second network element can perform related policy control functions and charging functions according to its own type.

In an embodiment, when the first network element (the second network element) is a PCF network element, after receiving a report entering and exiting the first PRA, the first network element (the second network element) will perform the policy control function. When the first network element (the second network element) is the CHF, after receiving the report entering and exiting the first PRA, the first network element (the second network element) will perform the charging function.

In an embodiment of the present application, based on other embodiments, the report entering and exiting the PRA can be reported to the first network element and the second network element at the same time when the PRA of the first network element is the same as the PRA of the second network element and when it is detected that the report entering and exiting the PRA reported by the MME network element is the report of the first network element entering and exiting the PRA. In this way, the first network element and the second network element can perform the control functions, such as the related policy function and the charging function, and this application can simultaneously report whether the PRA of the first network element and the PRA of the second network element change, simplifying the processing flow of the PGW-C and speeding up the processing speed of the PGW-C.

An embodiment of the present application relates to a method for sending the PRA, applied to the PGW-C in the 4G and 5G interoperable systems. As shown in FIG. 5, the method includes:
step 301, after receiving a first PRA sent by a first network element, sending a first message to a MME network element. The first message carries the first PRA and a reporting action, and the reporting action is configured to instruct starting the PRA.

In an embodiment, this step is substantially the same as the step 101 in the embodiment of the present application, which will not be repeated here.

Step 302, after receiving a second PRA sent by a second network element, sending a second message to the MME when the second PRA is the same as the first PRA. The second message carries the second PRA and a reporting action, and the reporting action is configured to indicate updating the PRA.

In an embodiment, this step is substantially the same as the step 102 in the embodiment of the present application, which will not be repeated here.

Step 303, sending a third message to the MME after receiving the second PRA sent by the second network element when the second PRA is different from the first PRA. The third message carries the second PRA and a reporting action, and the reporting action is configured to instruct starting PRA.

In an embodiment, when the second PRA of the second network element is different from the first PRA of the first network element, a third message will be sent to the MME network element. The third message carries the second PRA and the reporting action, and the field in the reporting action of the second message is configured to indicate starting PRA.

In the implementation of the present application, based on other embodiments, the instruction action of the second network element instructing starting the PRA can be re-send to the MME when the PRA of the first network element is different from the PRA of the second network element, to ensure that the PRA deployed by the operator is sent to the MME in a timely, accurate and reliable manner.

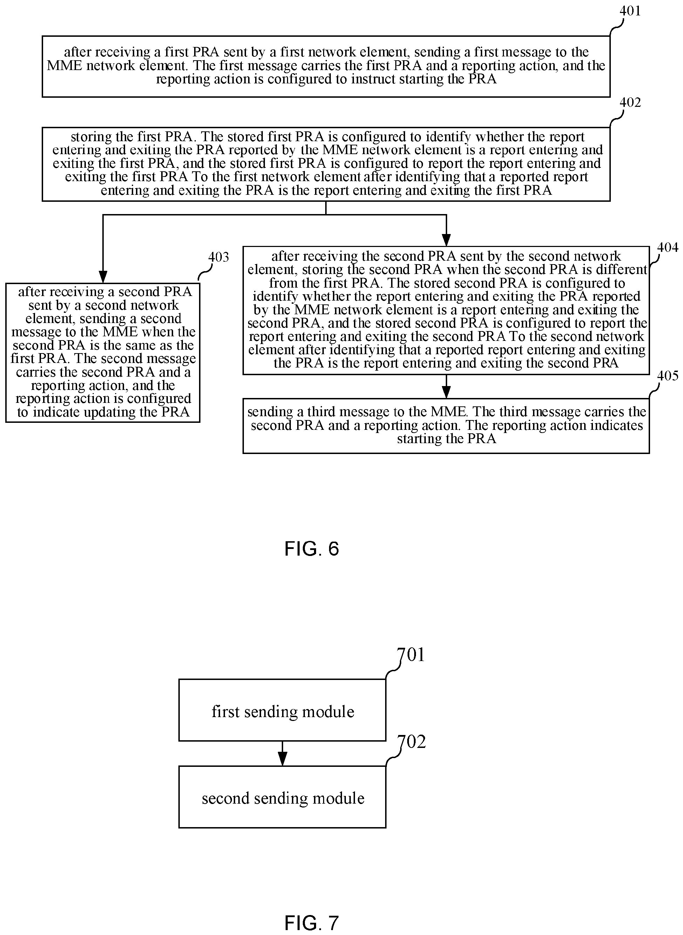

One embodiment of the present application relates to a method for sending the PRA, applied to PGW-C in the 4G and 5G interoperable systems. As shown in FIG. 6, the method includes:
step 401, after receiving a first PRA sent by a first network element, sending a first message to the MME network element. The first message carries the first PRA and a reporting action, and the reporting action is configured to instruct starting the PRA.

In an embodiment, this step is substantially the same as step 101 in the embodiment of the present application, which will not be repeated here.

Step 402, storing the first PRA. The stored first PRA is configured to identify whether the report entering and exiting the PRA reported by the MME network element is a report entering and exiting the first PRA, and the stored first PRA is configured to report the report entering and exiting the first PRA after identifying that a reported report entering and exiting the PRA is the report entering and exiting the first PRA.

In an embodiment, after receiving the first PRA sent by the first network element, the PGW-C will store the first PRA. Not only the PGW-C is configured to determine the difference between the first PRA of the first PRA and the second PRA of the second network element, but also the PGW-C is configured to identify whether the report entering and exiting the PRA reported by the MME network element is the report entering and exiting the first PRA.

In an embodiment, when the report entering and exiting the PRA reported by the MME network element is a report entering and exiting the first PRA of the first network element, the report entering and exiting the first PRA will be reported to the first network element, so that the first network element can perform the relevant policy control function and the charging function according to its own type.

In an embodiment, if the PRA of the second network element is the same as the first PRA of the first network element, when the report entering and exiting the PRA reported by the MME network element is the report entering and exiting the first PRA of the first network element, in addition to reporting the report entering and exiting the first PRA to the first network element, the MME network element will also report the report entering and exiting the first PRA to the second network element, so that the first network element and the second network element can perform related policy control functions and charging functions according to their own types.

Step 403, after receiving a second PRA sent by a second network element, sending a second message to the MME when the second PRA is the same as the first PRA. The second message carries the second PRA and a reporting action, and the reporting action is configured to indicate updating the PRA.

In an embodiment, this step is substantially the same as the step 102 in the embodiment of the present application, which will not be repeated here.

Step 404, after receiving the second PRA sent by the second network element, storing the second PRA when the second PRA is different from the first PRA. The stored second PRA is configured to identify whether the report entering and exiting the PRA reported by the MME network element is a report entering and exiting the second PRA, and the stored second PRA is configured to report the report entering and exiting the second PRA after identifying that a reported report entering and exiting the PRA is the report entering and exiting the second PRA.

In an embodiment, after receiving the second PRA sent by the second network element, the PGW-C first determines whether the PRA of the second network element is the same as the first PRA of the first network element. When the PRA of the second network element is different from the first PRA of the first network element, the second PRA will be stored. Not only the second PRA is used to determine the difference between the PRA of other network elements and the second PRA of the second network element, but also the second PRA is used to identify whether the report entering and exiting the PRA reported by the MME network element is the report entering and exiting the second PRA.

In an embodiment, when the report entering and exiting the PRA reported by the MME network element is the report entering and exiting the second PRA of the second network element, the report entering and exiting the second PRA will be reported to the second network element, so that the second network element can perform related policy control functions and charging functions according to its own type.

Step 405, sending a third message to the MME. The third message carries the second PRA and a reporting action. The reporting action indicates starting the PRA.

In an embodiment, this step is substantially the same as the step 303 in the embodiment of the present application, which will not be repeated here.

In the embodiment of the present application, bases on other embodiments, different PRAs of different network elements can also be stored on the PGW-C. After the PGW-C accurately determines the report entering and exiting the PRA reported by the MME, the report entering and exiting the PRA is reported to the network element corresponding to the report entering and exiting the PRA, so that PGW-C can ensure the accuracy of reporting the report entering and exiting the PRA to the network element.

The steps of the various methods above are divided just for the purpose of clear description. During implementation, they can be combined into one step or some steps can be divided into multiple steps as long as they include the same logical relationship, they all fall within the scope of the present application. Adding insignificant modifications or introducing insignificant designs to the algorithm or process without changing the core design of the algorithm and the process shall fall within the scope of the present application.

Another embodiment of the present application relates to a device for sending the PRA. The details of the device for sending the PRA in this embodiment are described detailedly below. The following content is only the implementation detail provided for ease of understanding and is not necessary to implement this embodiment. FIG. 7 is a schematic diagram of the device for sending the PRA according to this embodiment, which includes a first sending module 701 and a second sending module 702.

The first sending module 701 is configured to send a first message to the MME network element after receiving the first PRA sent by the first network element. The first message carries the first PRA and the reporting action. The reporting action indicates starting the PRA.

The second sending module 702 is configured to send a second message to the MME when the second PRA sent by the second network element is received and the second PRA is the same as the first PRA. The second message carries the second PRA and a reporting action. The reporting action indicates updating the PRA.

It is not difficult to find that this embodiment is a system embodiment corresponding to the above method embodiments, and this embodiment can be implemented in cooperation with the above method embodiments. The relevant technical details and technical effects mentioned in the above embodiments can still be adopted in this embodiment, which will not be repeated in order to reduce duplication. Correspondingly, the relevant technical details mentioned in this embodiment can also be applied to the above embodiments.

It is should be noted that each module involved in this embodiment is the logical module. In practical applications, a logical unit can be a physical unit, or a part of a physical unit, or it can be the combination of multiple physical units. In addition, in order to highlight the innovative part of the present application, units that are not closely related to solving the technical problems in this application are not introduced in this embodiment, but this does not mean that other units do not exist in this embodiment.

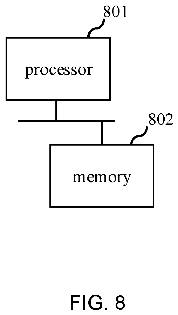

Another embodiment of the present application relates to an electronic equipment. As shown in FIG. 8, the electronic equipment includes at least one processor 801 and a memory 802 communicating with the at least one processor 801. The memory 802 stores an instruction that can be executed by the at least one processor 801, and the instruction can be executed by the at least one processor 801, so that the at least one processor 801 can execute the method for sending the PRA in the above embodiments.

The memory and the processor are connected by using a bus. The bus can include any number of interconnected buses and bridges. The bus connects one or more processors and various circuits of the memory together. The bus may also connect various other circuits, such as peripherals, voltage regulators, and power management circuits, which are all well known in the art and therefore will not be repeated herein. The bus interface provides the interface between the bus and the transceiver. A transceiver may be one element or may be multiple elements, such as multiple receivers and transmitters, providing units used for communicating with various other devices over a transmission medium. The data processed by the processor is transmitted over the wireless medium through the antenna. Further, the antenna also receives the data and transmits the data to the processor.

The processor is used for managing the bus and general processing, and can also provide a variety of functions, including timing, providing peripheral interfaces, voltage regulation, power management, and other control functions. The memory can be configured to store data used by the processor when the processor performs operations.

Another embodiment of the present application relates to a computer-readable storage medium storing a computer program. The above method embodiments are implemented when the computer program is executed by the processor.

That is, those skilled in the art can understand that all or part of the steps in the methods of the above embodiments can be completed by instructing relevant hardware through a program. The program is stored in a storage medium and includes several instructions to cause a device (which may be a microcontroller, a chip, and the like) or a processor to execute all or part of the steps of the methods described in various embodiments of the present application. The aforementioned storage media include mediums which can store program code, such as a U disk, a mobile hard disk, a read-only memory (ROM), a random access memory (RAM), a magnetic disk or an optical disk, and the like.

Those skilled in the art can understand that the above-mentioned embodiments are some embodiments for implementing the present application, and during actual applications, various modifications can be made in form and details without departing from the spirit and the scope of the present application.

## Claims

1. A method for sending a presence reporting area called PRA, **characterized by** comprising:
after receiving a first PRA sent by a first network element, sending a first message to a mobility management entity called MME network element, wherein the first message carries the first PRA and a reporting action, and the reporting action is configured to instruct starting the PRA; and
after receiving a second PRA sent by a second network element, sending a second message to the MME when the second PRA is the same as the first PRA, wherein the second message carries the second PRA and a reporting action, and the reporting action is configured to indicate updating the PRA.

2. The method for sending the PRA according to claim 1, further comprising:
after receiving the first PRA sent by the first network element, storing the first PRA; and
after sending the second message to the MME, reporting the report entering and exiting the first PRA to the first network element and the second network element in response to receiving a report entering and exiting the PRA reported by the MME network element and identifying the report entering and exiting the PRA to be as a report entering and exiting the first PRA according to a stored first PRA.

3. The method for sending the PRA according to claim 1, further comprising:
sending a third message to the MME after receiving the second PRA sent by the second network element when the second PRA is different from the first PRA, wherein the third message carries the second PRA and a reporting action, and the reporting action is configured to instruct starting PRA.

4. The method for sending the PRA according to claim 3, further comprising:
after receiving the first PRA sent by the first network element, storing the first PRA; and
storing the second PRA after receiving the second PRA sent by the second network element when the second PRA is different from the first PRA,
wherein a stored first PRA is configured to identify whether the report entering and exiting the PRA reported by the MME network element is a report entering and exiting the first PRA, and the stored first PRA is configured to report the report entering and exiting the first PRA when identifying that a reported report entering and exiting the PRA is the report entering and exiting the first PRA, and
a stored second PRA is configured to identify whether the report entering and exiting the PRA reported by the MME network element is a report entering and exiting the second PRA, and the stored second PRA is configured to report the report entering and exiting the second PRA when identifying that a reported report entering and exiting the PRA is the report entering and exiting the second PRA.

5. The method for sending the PRA according to any one of claims 1 to 3, wherein:
the first network element comprises a policy control function called PCF network element, and the second network element comprises a charging function called CHF network element; or
the first network element comprises a CHF network element, and the second network element comprises a PCF network element.

6. The method for sending the PRA according to any one of claims 1 to 3, wherein:
the sending the first message to the MME network element comprises sending a first update bearer request to the MME network element, wherein the first update bearer request carries the first PRA and a reporting action indicating starting the PRA; and
the sending the second message to the MME comprises sending a second update bearer request to the MME network element, wherein the second update bearer request carries the second PRA and a reporting action indicating updating the PRA.

7. The method for sending the PRA according to any one of claims 1 to 3, wherein both the first PRA sent by the first network element and the second PRA sent by the second network element are received through a service SBI interface.

8. A device for sending a presence reporting area called PRA, **characterized by** comprising:
a first sending module configured to send a first message to a mobility management entity called MME network element after receiving a first PRA sent by a first network element, wherein the first message carries the first PRA and a reporting action, and the reporting action is configured to instruct starting PRA; and
a second sending module configured to send a second message to the MME when the second PRA is the same as the first PRA after receiving a second PRA sent by a second network element, wherein the second message carries the second PRA and a reporting action, and the reporting action is configured to indicate updating the PRA.

9. An electronic equipment, **characterized by** comprising:
at least one processor; and
a memory communicating with the at least one processor,
wherein the memory stores an instruction executable by the at least one processor, and the instruction is executed by the at least one processor to make the at least one processor implement the method for sending the PRA according to any one of claims 1 to 7.

10. A computer-readable storage medium storing a computer program, **characterized in that** when the computer program is executed by a processor, the method for sending the PRA according to any one of claims 1 to 7 is implemented.
